# EUROPEAN PATENT SPECIFICATION

(11) **EP 3 822 966 B1**
(45) Date of publication and mention of the grant of the patent: **13.09.2023**
(21) Application number: 20206707.0
(22) Date of filing: 10.11.2020
(51) Int. Cl.: G10L 15/22, G06F 3/16, D06F 34/05, H04L 12/28, G10L 15/08, D06F 34/28, D06F 34/32, D06F 101/00, D06F 105/58, D06F 105/60

(54) **METHOD AND SYSTEM FOR CONTROLLING AND/OR COMMUNICATING WITH A HOUSEHOLD APPLIANCE BY MEANS OF VOICE COMMANDS WITH VERIFICATION OF THE ENABLING OF A REMOTE CONTROL**
VERFAHREN UND SYSTEM ZUR STEUERUNG UND/ODER KOMMUNIKATION MIT EINEM HAUSHALTSGERÄT MITTELS SPRACHBEFEHLEN MIT VERIFIZIERUNG DER FREIGABE EINER FERNBEDIENUNG
PROCEDE ET SYSTEME DE COMMANDE ET/OU DE COMMUNICATION AVEC UN APPAREIL MENAGER AU MOYEN DE COMMANDES VOCALES AVEC VERIFICATION DE L'ACTIVATION D'UNE COMMANDE A DISTANCE

(30) Priority: 12.11.2019 IT 201900020943
(43) Date of publication of application: 19.05.2021
(73) Proprietor: Candy S.p.A., 20052 Monza (MB) (IT)
(72) Inventor: SERGI, Leonardo, I-20900 Monza, MONZA E BRIANZA (IT)
(74) Representative: Brunazzi, Stefano

(56) References cited:
- EP-A2- 3 413 304
- US-A1- 2015 302 856
- US-A1- 2019 228 780

## Description

### TECHNOLOGICAL BACKGROUND OF THE INVENTION

### Field of application.

The present invention relates to the technical field of voice control for household appliances in general.

In particular, the invention relates to a method and system for controlling and/or communicating with a household appliance by means of voice commands and with verification of the enabling of a remote control.

### Description of the prior art.

In the technical field of household appliances equipped with an advanced user interface, several solutions which allow controlling the household appliance and/or communicating therewith by means of voice commands are known.

Typically, voice communication is activated by means of a keyword or an activation word.

Once activated, the voice communication allows interacting with the household appliance, for example to provide commands, by means of voice inputs from the user, which are suitably recognized by various possible voice recognition technologies, which in themselves are known.

In such a context, since the voice command may be imparted by a user also from a remote position with respect to the household appliance, there is a need to avoid commands or control actions from being imparted which are incompatible with the current state of the household appliance (which is not known to the remote user) or which could result in malfunctioning or even hazards.

"Remote control" solutions are known to this end. Such a brief definition indicates (and will indicate in this description) a procedure of "enabling or disabling the possibility of performing a remote control", i.e., performing actions following remote voice commands, for example.

On the other hand, the solutions with voice commands advantageously allow a significant flexibility in use, since not only do they allow the user to impart commands or set control actions requiring remote control, but also to ask questions or make requests for actions which, in themselves, do not require a verification of remote control enabling.

In this context, the rigid and indiscriminate application of "remote control" procedures (which are anyway necessary and unavoidable, to a certain extent) may be disadvantageous for the user in terms of less effectiveness and speed and increased complexity.

In this context, there emerges the need (not completely met by the solutions known to date) to devise methods and systems for controlling and/or communicating with a household appliance by means of voice commands which improve the interactions with the verification procedures of the remote control enabling in order to provide the user with effective, quick, simple, and simultaneously safe, voice command solutions.

The U.S. Patent Application US 2015/302856 A1 describes a method and an apparatus for performing function by speech input.

The European Patent Application EP 3 413 304 A2 discloses a method for operating home appliance and a voice recognition server system.

### SUMMARY OF THE INVENTION

It is the object of the present invention to provide a method for controlling and/or communicating with a household appliance by means of voice commands and with verification of the remote control enabling, which allows the above-mentioned drawbacks, indicated with reference to the known art, to be at least partially obviated and the above-mentioned needs, which are particularly felt in the considered technical field, to be met. Such an object is achieved by a method according to claim 1.

Further embodiments of such a method are defined by claims 2 to 9.

It also in an object of the present invention to provide a system for controlling and/or communicating with a household appliance by means of voice commands and with verification of remote control enabling, which is capable of performing the aforesaid method. Such a system is defined in claim 10.

Further embodiments of such a system are defined by claims 11 to 14.

The object of the present invention is also a household appliance adapted to be controlled by means of voice commands and with verification of remote control enabling, according to the aforesaid method. Such a household appliance is defined in claim 15.

### BRIEF DESCRIPTION OF THE DRAWINGS

Further features and advantages of the method and system according to the invention will be apparent from the following description which illustrates preferred embodiments, given by way of indicative, non-limiting examples, with reference to the accompanying drawing, in which:
- Figures 1 and 2 show, by means of respective simplified block diagrams, two respective embodiments of a system for controlling and/or communicating with a household appliance by means of voice commands, according to the present invention;
- Figure 3 is a flow chart which describes exchanges of information, verifications and actions which occur in an embodiment of the method according to the invention;
- Figure 4 shows an embodiment of a household appliance according to the invention.

### DETAILED DESCRIPTION

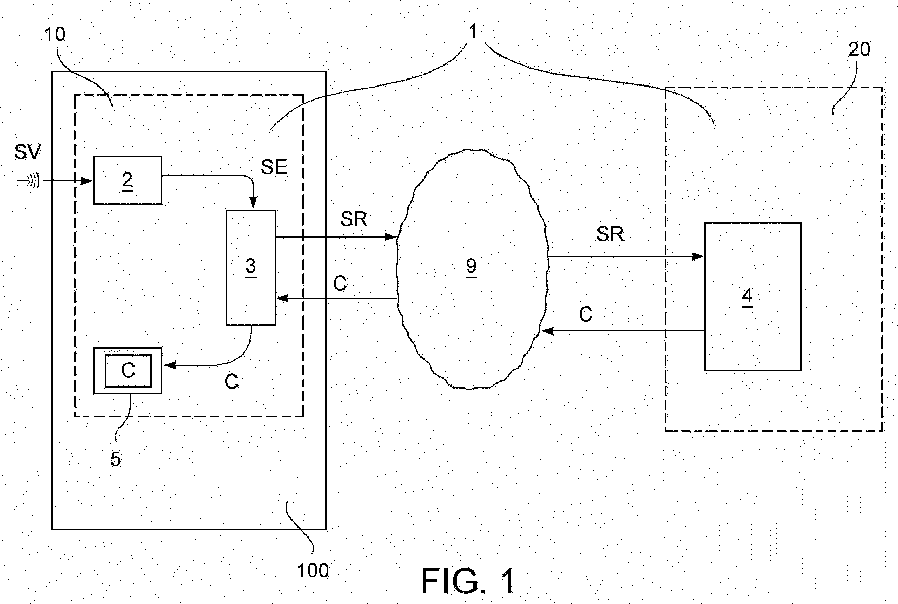

With reference to Figure 1, a method for controlling and/or communicating with a household appliance 100 by means of voice commands and with verification of the enabling of a remote control, is described.

The method firstly comprises the steps of receiving an acoustic voice signal SV, corresponding to a voice query and/or request expression uttered by a user, and generating a corresponding first electric signal SE representative of the acoustic voice signal SV, by voice receiving means 2 integrated in the household appliance 100.

The method then provides generating a query and/or request electric signal SR based on the aforesaid received first electric signal SE, representative of the acoustic voice signal SV, by first processing means 3 integrated in the household appliance 100 operatively connected to the aforesaid voice receiving means 2, and transmitting the query and/or request electric signal SR to second processing means 4.

The method then comprises the steps of processing the aforesaid query and/or request electric signal SR, by the second processing means 4, to identify a user query and/or request, and of recognizing, again by the second processing means 4, if the user query and/or request is a command and/or control action which requires remote control enabling.

If the user query and/or request is recognized as a command and/or control action which does not require remote control enabling, the method provides proceeding directly with the following steps of determining and providing the user with a response: determining a response to be provided to the user on the basis of the identified user query and/or request, by the second processing means 4; then generating a response electric signal C corresponding to the determined response, by the second processing means 4; then transmitting the aforesaid response electric signal C to the first processing means 3 of the household appliance; finally, providing the user with a visual and/or written and/or voice response, by visual display means 5 or sound reproduction means 7 comprised in the household appliance 100, on the basis of the aforesaid response electric signal C.

If the user query and/or request is recognized as a command and/or control action which requires remote control enabling, the method provides performing a remote control verification and/or enabling procedure and then performing the aforesaid steps of determining and providing a response to the user only if and when the remote control verification and/or enabling procedure has been completed in a circumstance in which the remote control is enabled (i.e., in other words, only if and when the state of the household appliance is such as to ensure the electronic control is enabled).

The aforesaid remote control verification and/or enabling procedure (performed if there is a need for the remote control function to be enabled) firstly provides verifying whether a remote control enabling state is activated in the household appliance 100.

If it is verified that a remote control enabling state is activated in the household appliance 100, the method provides determining the execution of the command and/or control action in the household appliance 100 (step which is started by the first processing means 3 of the household appliance).

If it is verified that a remote control enabling state is not activated in the household appliance 100, the method provides setting a standby state and asking the user for an enabling action before executing the command and/or control action.

It should be noted that the above-described method is specifically directed to an application in the context of household appliances and provides verifying whether a possibility of remote control of the household appliance is enabled, i.e., a verification on the control state (i.e., "control status") of the household appliance which extends well beyond mere verifications of the correctness of the received voice command (which are also provided).

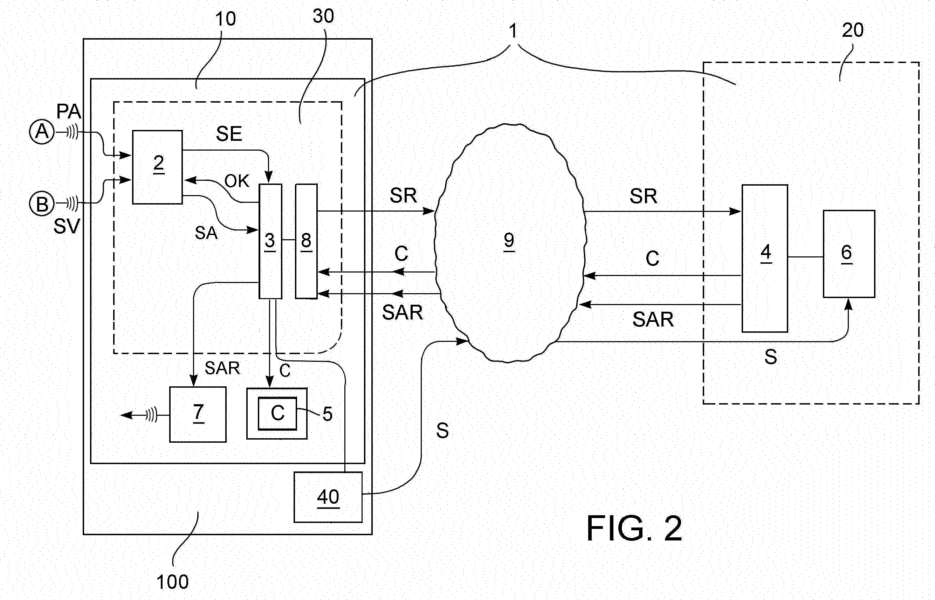

Further embodiments of the method are herein described with reference to Figure 2.

According to an embodiment of the method, the step of verifying whether a remote control enabling state is activated in the household appliance 100 is performed by the first processing means 3 by means of local processing, through a connection to a local control unit 40 of the household appliance 100.

According to another embodiment of the method, the step of verifying whether a remote control enabling state is activated in the household appliance 100 is performed by the second processing means 4 by means of connection to storage means 6 which are in remote communication with the control unit 40 of the household appliance 100 and periodically receive and store the state S thereof.

The generic reference "S", in Figure 2, indicates signals representative of the state of the household appliance, which comprise indications about whether the remote control is enabled or not ("remote state" ON or OFF).

According to an embodiment, if the user query and/or request is interpreted as a command and/or control action which requires remote control enabling, and it is verified that a remote control enabling state is not activated in the household appliance 100, the method further comprises the steps of activating the remote control enabling state, if the user performs the enabling action, by means of the voice activation word or by means of manual command, and determining or starting the execution of the command and/or control action in the household appliance.

The step of determining or starting the execution of the command and/or control action in the household appliance is performed, in various possible implementations, by the first processing means 3 of the household appliance, or by the control unit 40 of the household appliance, or in cooperation between the aforesaid first processing means 3 and control unit 40.

According to various implementations, the activation word is a generic activation word PA pronounced by the user, or a specific activation word aiming to enable the remote control.

According to an embodiment, before the step of receiving an acoustic voice signal SV, the method comprises the steps of receiving an activation word PA pronounced by the user and generating a respective activation word electric signal SA, by the voice receiving means 2 integrated in the household appliance; and recognizing the activation word PA by the first processing means 3.

In the case the recognition of the activation word is successful, the method provides carrying out the step of receiving an acoustic voice signal SV corresponding to a voice query and/or request utterance and the successive steps shown in the previously described embodiments.

According to an implementation option, the step of generating a query and/or request electric signal SR comprises generating a respective audio stream query and/or request signal SR representative of the acoustic voice signal SV.

According to one embodiment of the method, the step of processing the electric query and/or request signal SR comprises recognizing whether the query and/or request is open or closed.

A query and/or request is recognized as closed if it corresponds to a determined query and/or request, such that the second processing means 4 are capable of providing a predetermined univocal response relating to the query and/or request, on the basis of information and/or states of the household appliance which are accessible to the second processing means 4.

A query and/or request is recognized as open in all cases in which the query and/or request is not recognized as closed.

According to an implementation option of the method, if the query and/or request is closed, the step of identifying the user query and/or request comprises identifying the recognized closed query and/or request as a user query and/or request; and the step of determining a response to be provided to the user comprises determining, as a response, the aforesaid predetermined univocal response relating to the closed query and/or request.

If the query and/or request is open, the step of identifying the user query and/or request comprises interpreting the open query and/or request as a partial query and/or request.

In this case, the method comprises the further steps of determining and sending an interlocutory response to the user, comprising a request for further clarifications; and setting a standby state prepared to receive a further completion voice utterance to complete the request and/or query by the user.

According to an implementation option of the method, the step of recognizing whether the user query and/or request is a command and/or a control action requiring remote control enabling, comprises: verifying whether the user query and/or request is closed; verifying whether the user query and/or request corresponds to a command and/or control action requiring remote control enabling, on the basis of information stored in the storage means 6 or otherwise accessible by the second processing means 4.

According to an implementation option of the method, the step of processing the query and/or request electric signal SR to identify a user query and/or request comprises interpreting the user query and/or request as a command and/or control action and/or question.

In this case, the method further comprises the following steps, according to the possible alternatives.

If the user query and/or request is interpreted as a command, the method provides transmitting a command signal corresponding to the command to the first processing means 3 of the household appliance, by the second processing means 4.

If the user query and/or request is interpreted as a control action, the method provides consulting, by the second processing means 4, storage means 6 in which state S of the household appliance 100 is periodically stored to define the action to be implemented and the execution mode.

If the user query and/or request is interpreted as a pertinent question, such that the second processing means 4 are capable of providing a univocal response, the method provides generating such a univocal response to the question, by the second processing means 4.

If the user query and/or request is interpreted as a non-pertinent question, such that the second processing means 4 are not capable of providing a univocal response, the method provides generating an interlocutory response for a request for further information, by the second processing means 4.

According to an embodiment of the method, the step of recognizing the activation word, by first processing means 3, and the step of processing the query and/or request electric signal SR, by the second processing means 4, comprise executing at least one voice recognition algorithm and/or procedure.

According to various possible implementation options, the voice recognition algorithm and/or procedure is selected between various possible types of algorithms and/or vocal recognition procedure in themselves known.

According to an implementation option, procedures based on machine learning computational techniques are used.

According to one embodiment of the method, the step of generating a response electric signal C corresponding to the determined response comprises generating a first string of text characters corresponding to the response to be provided to the user.

According to a particular implementation option, the aforesaid step further comprises generating a second string of text characters corresponding to the question of the user, as it is interpreted on the basis of at least one algorithm and/or procedure for transforming into text a voice command that can be executed by the second processing means 4.

According to an implementation option, procedures based on machine learning computational techniques or other algorithms or procedures in themselves known are used to transform a voice command into text.

According to anther embodiment of the method, the step of generating a response electric signal C corresponding to the determined response comprises, after the step of determining a response to the command and/or control action, the further steps of generating a response audio signal SAR, corresponding to the determined response, by the second processing means 4; then transmitting the aforesaid response audio signal SAR to the first processing means 3 of the household appliance; finally reproducing the response audio signal SAR to generate a voice response output, by voice output generation means 7 comprised in the household appliance.

With reference to the step of providing the user with a response, various embodiments are possible, consistently with the respective options for generating an above-mentioned electric response signal.

According to one embodiment, the step of providing the user with a response comprises providing the user with a written response, by means of display means 5 of the household appliance.

According to an implementation option, the written response comprises displaying the aforesaid first string of text characters and/or second string of text characters as pop-up on a screen 5 comprised in the household appliance.

According to another embodiment, the step of providing the user with a response comprises providing the user with visual information.

According to one embodiment, the step of providing the user with a response comprises providing the user with a voice response, by means of voice output generation means 7 comprised in the household appliance.

According to an implementation option, the vocal response comprises the sound reproduction of the aforesaid response audio signal SAR, which is generated by the second processing means 4 and transmitted to the first processing means 3.

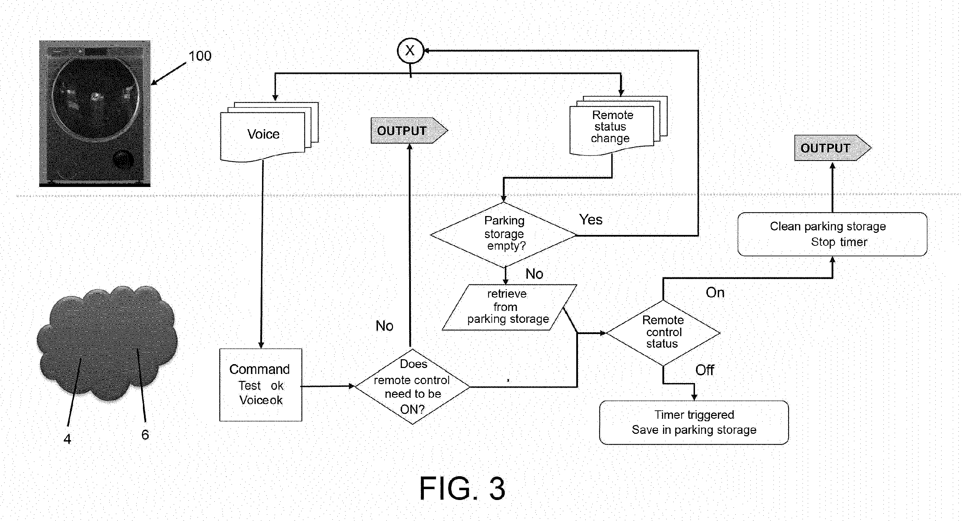

With reference to Figure 3, certain further details are provided below, by mere way of example of an embodiment of the method of the invention.

Figure 3 shows a flow chart of the actions performed in an embodiment of the method, showing certain exchanges of relevant information, certain actions and verifications which are performed, and the related reference to the logic level and/or physical entity (belonging to the household appliance, in local or at a remote cloud) in which the various actions, verifications and exchanges of information occur.

In particular, the chart in Figure 3 shows the controls related to the enabling or non-enabling of the remote control and the subsequent actions.

Figure 3 also mentions a "parking storage" (which may, for example, be implemented in the remote storage means 6 or may belong to the second processing means 4), which is configured to save a command or request by the user which can only be executed if the remote control is enabled, pending the verification and/or enabling of the activation state of the remote control.

In this case, the stored command or request is retrieved by the second processing means 4 and suitably processed for the successive actions only when the remote control is enabled: this occurs if it has been verified that the state of the household appliance already provides "remote control ON" or, in the contrary case, after the user has possibly enabled the remote control by means of voice commands or other command.

With regards to the entities indicated on the left-hand part of the chart in Figure 3, it should be noted that the household appliance 100 in this embodiment comprises both the control unit 40 (which is also connected to the remote storage means 6 to provide information on the state of the household appliance) and the first processing means 3.

The second processing means 4 are implemented, in this example, in a distributed manner in a cloud and comprise, for example, a voice recognition software module.

The cloud further comprises the storage means 6.

With reference to Figure 1, a system for controlling and/or interacting with a household appliance 100 by means of voice commands and with verification of the enabling of a remote control is described below.

Such a system comprises voice reception means 2 and first processing means 3 integrated in the household appliance 100, second processing means 4 (typically, remote) and a user interface 5 comprised in the household appliance 100.

The aforesaid voice receiving means 2 integrated in the household appliance 100 are configured to receive an acoustic voice signal SV corresponding to a voice query and/or request utterance pronounced by the user and to transform it into a corresponding first electric signal SE representative of the acoustic voice signal SV.

The first processing means 3 integrated in the household appliance 100 are operatively connected to the aforesaid voice receiving means 2 to receive said first electric signal SE and are configured to generate a query and/or request electric signal SR based on said first electric signal SE, representative of the acoustic voice signal SV.

The second processing means 4 are operatively connected to the aforesaid first processing means 3 and are configured to carry out the following steps: receiving the query and/or request electric signal SR from the first processing means 3; processing such a query and/or request electric signal SR to identify a user query and/or request; and recognizing whether the user query and/or request is a command and/or control action which requires remote control enabling.

If the user query and/or request is recognized as a command and/or control action which does not require remote control enabling, the second processing means 4 are configured to proceed directly with the following steps of determining and providing the user with a response, i.e. to perform the following actions: determining a response to be provided to the user, on the basis of the identified user query and/or request, generating a response electric signal C corresponding to the determined response, and transmitting such a response electric signal C to the first processing means 3 of the household appliance.

If the user query and/or request is recognized as a command and/or control action which requires remote control enabling, the second processing means 4 are configured to perform a remote control verification and/or enabling procedure and then perform the aforesaid steps of determining and providing a response to the user, which are executed only if and when the remote control verification and/or enabling procedure has been completed in a circumstance in which the remote control is enabled (i.e., in other words, only if and when the state of the household appliance is such as to ensure the electronic control is enabled).

The aforesaid remote control verification and/or enabling procedure comprises verifying whether a remote control enabling state is activated in the household appliance 100. If it is verified that a remote control enabling state is activated in the household appliance 100, the first processing means 3 of the household appliance are configured to determine the execution and/or the starting of the command and/or control action in the household appliance 100. If it is verified that a remote control enabling state is not activated in the household appliance 100, a standby state is set and the user is asked for an enabling action before executing the command and/or control action.

The user interface 5 of the household appliance 100 is operatively connected to the first processing means 3 and is configured to provide a visual and/or written and/or voice response to the user on the basis of the aforesaid response electric signal C.

With reference to Figures 1 and 2, further embodiments of the system 1 are described.

According to various possible embodiments of the system 1, the first processing means 3 and the second processing means 4 are also configured to carry out a method according to any one of the embodiments described above.

According to one embodiment, the system 1 further comprises a control unit 40 of the household appliance and further comprises storage means 6 which typically are located remotely with respect to the household appliance.

The control unit 40 of the household appliance is operatively connected to the first processing means 3 and configured to cooperate with the first processing means 3 in order to execute commands and/or control actions of the household appliance 100.

Moreover, the control unit 40 is configured to control and/or monitor information relating to state S of the household appliance, comprising information about the enabling or disabling of the remote control state of the household appliance.

The storage means 6 are operatively connected both to the second processing means 4 and to the control unit 40 of the household appliance and are configured to perform the following actions: receiving, from the aforesaid control unit 40, and storing the aforesaid information relating to state S of the household appliance, and providing the second processing means 4 with updated information on the enabling or disabling of the remote control state of the household appliance.

According to an implementation option of the system, the visual interface 5 comprises a screen 5 integrated in the household appliance and configured to display a string C of text characters corresponding to the response provided by the second processing means 4.

According to an implementation example, the aforesaid screen 5 comprises a liquid crystal display or other type of display in itself known, either already provided in the household appliance or added to it to provide the visual interface function.

According to another implementation option of the system, the second processing means 4 are further configured to generate a response audio stream signal SAR corresponding to the determined response, and to transmit such a response audio stream signal SAR to the first processing means 2.

In this case, system 1 further comprises voice output generation means 7 integrated in the household appliance 100 and configured to reproduce the response audio stream signal SAR to generate a voice response output.

According to a particular implementation option of the system, the voice receiving means 2 comprise one or more microphones; the first processing means 3 comprise one or more electronic processing circuits and/or one or more electronic processors; and the system 1 further comprises transmission means 8 configured to transmit the aforesaid electric query or request signal SR.

According to an embodiment, the aforesaid voice receiving means 2, first processing means 3 and transmission means 8 are integrated in a voice recognition module 30 incorporated in the household appliance 100.

According to a particular implementation option of the system, the second processing means 4 comprise one or more electronic processing circuits and/or one or more electronic processors, arranged remotely with respect to the household appliance 100. In this case, system 1 further comprises telecommunication means 9 configured to connect the transmission means 8 of the household appliance to the second remote processing means 4.

According to an implementation example of the system, the second processing means 4 are implemented in a cloud infrastructure 20 and the telecommunication means 9 comprise wireless communication means, a router and an infrastructure for telecommunicating to the cloud infrastructure 20.

According to an embodiment of the system, the voice receiving means 2 are further configured to receive a first activation word PA pronounced by a user and to generate a respective activation word electric signal SA. The first processing means 3 are further configured to recognize the activation word, and in case of the activation word I successfully recognized, to execute the aforesaid step of generating a query and/or request electric signal SR.

According to another embodiment of the system, the voice receiving means 2 are further configured to receive a second activation word PA pronounced by a user (provided to enable the remote control state) and to generate a respective second activation word electric signal. The first processing means 3 are further configured to recognize the second activation word, and in case the second activation word is successfully recognized, to enable the remote control of the household appliance.

According to an implementation option, the aforesaid first and second activation words coincide and the enabling effect of the remote control occurs if the activation word is pronounced in response to a request by the system for the user to request remote control enabling.

According to an embodiment of the system, the first processing means 3 are further configured to generate a query and/or request audio stream signal SR representative of the acoustic voice signal SV, as the query and/or request electric signal SR.

According to an embodiment, system 1 further comprises voice output generation means 7 integrated in the household appliance 100 and configured to reproduce the response audio stream signal SAR to generate a voice response output.

According to an implementation option, the voice output generation means 7 comprise a speaker or other sound reproduction means 7 adapted to provide the audio response.

With reference to Figures 1, 2 and 4, a household appliance 100 according to the invention is now described.

The household appliance 100 comprises a first portion 10 of a system 1 comprising at least the aforesaid voice receiving means 2, first processing means 3 and visual interface 5 (according to any one of the implementation options described above).

The household appliance 100 is operatively connected to a second portion 20 of a system 1 comprising at least the aforesaid second processing means 4 (according to any one of the implementation options described above).

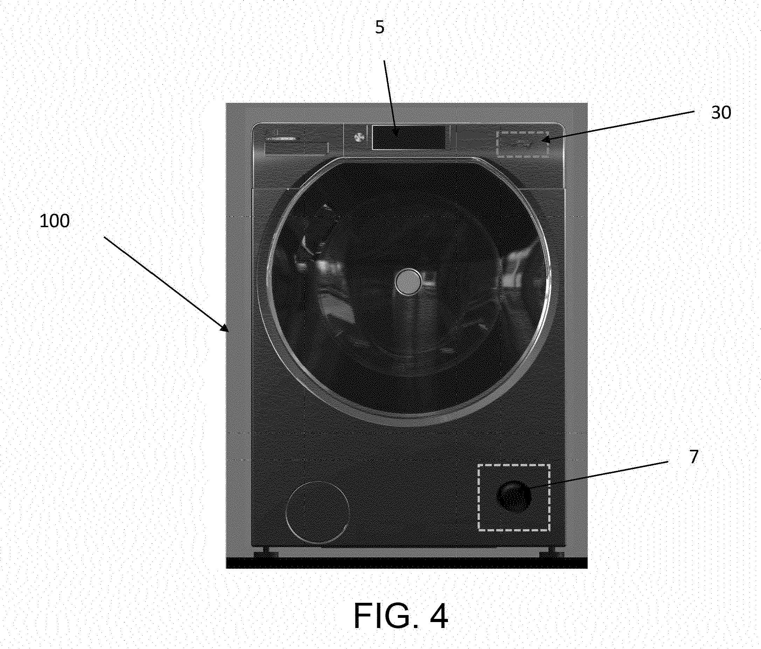

In the example shown in Figure 4, the household appliance is a washing machine. Figure 4 shows the visual interface, i.e., screen 5, the voice recognition module 30 and the sound reproduction means 7.

It is worth noting that the object of the present invention is fully achieved by the method and system illustrated above by virtue of the functional and structural features thereof.

Indeed, the above-described method and the system for controlling and/or communicating with a household appliance are capable of interpreting the user queries and/or requests and of discriminating the user queries and/or requests requiring remote control enabling from the user queries and/or requests requiring remote control which do not require remote control enabling.

Once such a discrimination has been performed, the required verification and/or remote control enabling procedures are performed for all and only those user queries and/or requests that actually require remote control enabling (thereby ensuring the adequate safety levels).

On the contrary, the user queries and/or requests that do not require remote control enabling are processed and performed without verification procedures and/or remote control enabling procedures (which are not required in these cases), thus ensuring response and execution speed and effectiveness.

A person skilled in the art may make changes and adaptations to the embodiments of the method and system described above or can replace elements with others which are functionally equivalent to satisfy contingent needs without departing from the scope of protection of the appended claims. All the features described above as belonging to one possible embodiment may be implemented independently from the other embodiments described.

## Claims

1. A method for controlling and/or communicating with a household appliance (100) by means of voice commands and with verification of the enabling of a remote control, comprising the steps of:
- receiving an acoustic voice signal (SV), corresponding to a voice query and/or request expression uttered by a user, and generating a corresponding first electric signal (SE) representative of the acoustic voice signal (SV), by voice receiving means (2) integrated in the household appliance (100);
- generating a query and/or request electric signal (SR), based on said received first electric signal (SE), representative of the acoustic voice signal (SV), by first processing means (3) integrated in the household appliance (100) operatively connected to said voice receiving means (2);
- transmitting said query and/or request electric signal (SR) to second processing means (4);
- processing said query and/or request electric signal (SR), by the second processing means (4), to identify a user query and/or request;
- recognizing, by the second processing means (4), whether the user query and/or request is a command and/or control action which requires remote control enabling;
- if the user query and/or request is recognized as a command and/or control action which does not require remote control enabling, proceeding directly with the following steps:
- determining a response to be provided to the user on the basis of the identified user query and/or request, by the second processing means (4);
- generating a response electric signal (C) corresponding to the determined response, by the second processing means (4);
- transmitting said response electric signal (C) to the first processing means (3) of the household appliance;
- providing the user with a visual and/or written and/or voice response, by visual display means (5) or sound reproduction means (7) comprised in the household appliance (100), based on said response electric signal (C);
- if the user query and/or request is recognized as a command and/or control action which requires remote control enabling, performing a remote control verification and/or enabling procedure and then performing said steps of determining and providing a response to the user;
wherein said remote control verification and/or enabling procedure comprises:
- verifying whether a remote control enabling state is activated in the household appliance (100);
- if it is verified that a remote control enabling state is activated in the household appliance (100), determining the execution of the command and/or control action in the household appliance (100);
- if it is verified that a remote control enabling state is not activated in the household appliance (100), setting a standby state and asking the user for an enabling action before executing the command and/or control action.

2. A method according to claim 1, wherein the step of verifying whether a remote control enabling state is activated in the household appliance (100) is performed by the first processing means (3) by means of local processing, through a connection to a local control unit (40) of the household appliance (100), or is performed by the second processing means (4) by means of a connection to storage means (6) which are in remote communication with the control unit (40) of the household appliance (100) and periodically receive and store the state (S) thereof.

3. A method according to any one of the preceding claims, wherein if the user query and/or request is interpreted as a command and/or control action which requires remote control enabling, and it is verified that a remote control enabling state is not activated in the household appliance (100), the method further comprises the step of:
- if the user performs the enabling action by means of voice activation word or by manual command, activating the remote control enabling state and either determining or starting the execution of the command and/or control action in the household appliance, by the first processing means (3) of the household appliance.

4. A method according to any one of the preceding claims, comprising, before said step of receiving an acoustic voice signal (SV), the steps of:
- receiving an activation word (PA) uttered by the user and generating a respective activation word electric signal (SA), by said voice receiving means (2) integrated in the household appliance;
- carrying out a recognition of the activation word (PA), by said first processing means (3);
- in the case the recognition of the activation word is successful, proceeding to carry out said step of receiving an acoustic voice signal (SV) corresponding to a voice query and/or request utterance and the subsequent steps as defined in claim 1.

5. A method according to claim 3 or claim 4, wherein the step of generating a query and/or request electric signal (SR) comprises generating a respective audio stream query and/or request signal (SR) representative of the acoustic voice signal (SV),
and/or wherein the step of recognizing the activation word by first processing means (3) and the step of processing the query and/or request electric signal (SR), by the second processing means (4), comprise executing at least one voice recognition algorithm and/or procedure.

6. A method according to any one of the preceding claims, wherein said step of processing the query and/or request electric signal (SR) comprises recognizing whether the query and/or request is open or closed,
wherein a query and/or request is recognized as closed if it corresponds to a specific query and/or request, such that the second processing means (4) are capable of providing a predetermined univocal response relating to the query and/or request, based on information and/or states of the household appliance which are accessible to the second processing means (4),
and wherein a query and/or request is recognized as open in all cases in which said query and/or request is not recognized as closed.

7. A method according to claim 6, wherein:
if the query and/or request is closed:
- the step of identifying the user query and/or request comprises identifying the recognized closed query and/or request as a user query and/or request;
- the step of determining a response to be provided to the user comprises determining, as a response, said predetermined univocal response relating to the closed query and/or request;
if the query and/or request is open:
- the step of identifying the user query and/or request comprises interpreting the open query and/or request as a partial query and/or request,
and the method comprises the further steps of:
- determining and sending an interlocutory response to the user, comprising a request for further clarifications;
- setting a standby state prepared to receive a further completion voice utterance to complete the request and/or query by the user.

8. A method according to any one of claims 6 or 7, wherein the step of recognizing whether the user query and/or request is a command and/or control action which requires remote control enabling, comprises:
- verifying whether the user query and/or request is closed;
- if the user query and/or request is closed, checking, on the basis of information stored in the storage means (6) or otherwise accessible by the second processing means (4), whether the user query and/or request corresponds to a command and/or control action requiring remote control enabling.

9. A method according to any one of the preceding claims, wherein the step of processing the query and/or request electric signal (SR) to identify a user query and/or request, comprises:
- interpreting the user query and/or request as a command and/or a control action and/or a question;
and wherein the method further comprises the steps of:
if the user query and/or request is interpreted as a command, transmitting a command signal corresponding to the command to the first processing means (3) of the household appliance, by the second processing means (4);
if the user query and/or request is interpreted as a control action, consulting, by the second processing means (4), storage means (6) in which the state of the household appliance (100) is periodically stored, to define the action to be implemented and the execution mode;
if the user query and/or request is interpreted as a pertinent question, such that the second processing means (4) are capable of providing a univocal response, generating said univocal response to the question, by the second processing means (4);
if the user query and/or request is interpreted as a non-pertinent question, such that the second processing means (4) are not capable of providing a univocal response, generating an interlocutory response for a request for further information, by the second processing means (4).

10. A system (1) for controlling and/or interacting with a household appliance (100) by means of voice commands and with verification of the enabling of a remote control, comprising:
- voice receiving means (2) integrated in the household appliance (100), configured to receive an acoustic voice signal (SV), corresponding to a query and/or request voice expression pronounced by the user, and to transform it into a corresponding first electric signal (SE) representative of the acoustic voice signal (SV);
- first processing means (3) integrated in the household appliance (100) operatively connected to said voice receiving means (2) to receive said first electric signal (SE), said first processing means (3) being configured to generate a query and/or request electric signal (SR) based on said first electric signal (SE), representative of the acoustic voice signal (SV);
- second processing means (4) operatively connected to said first processing means (3), said second processing means (4) being configured to:
receive said query and/or request electric signal (SR) from the first processing means (3);
process said electric query and/or request signal (SR) to identify a user query and/or request;
recognize whether the user query and/or request is a command and/or control action which requires remote control enabling;
- if the user query and/or request is recognized as a command and/or control action which does not require remote control enabling, proceeding directly with the steps of:
determining a response to be provided to the user, based on the identified user query and/or request, generating a response electric signal (C) corresponding to the determined response, and transmitting said response electric signal (C) to the first processing means (3) of the household appliance;
- if the user query and/or request is recognized as a command and/or control action which requires remote control enabling, performing a remote control verification and/or enabling procedure and then performing said steps of determining and providing a response to the user;
wherein said remote control verification and/or enabling procedure comprises:
- verifying whether a remote control enabling state is activated in the household appliance (100);
- if it is verified that a remote control enabling state is activated in the household appliance (100), determining the executing and/or the starting the command and/or control action in the household appliance (100);
- if it is verified that a remote control enabling state is not activated in the household appliance (100), setting a standby state and asking the user for an enabling action before executing the command and/or control action;
- a user interface (5) comprised in the household appliance (100), operatively connected to said first processing means (3), said user interface (5) being configured to provide a visual and/or written and/or voice response to the user based on said response electric signal (C).

11. A system (1) according to claim 10, further comprising:
- a control unit (40) of the household appliance operatively connected to the first processing means (3) and configured to cooperate with said first processing means (3) in order to execute commands and/or control actions of the household appliance (100), and further configured to control and/or monitor information relating to the state (S) of the household appliance, comprising information on the enabling or disabling of the remote control state of the household appliance;
- storage means (6) operatively connected to the second processing means (4) and to said control unit (40) of the household appliance, said storage means (6) being configured to:
- receive, from said control unit (40), and store said information relating to the state (S) of the household appliance;
- provide the second processing means (4) with said updated information on the enabling or disabling of the remote control state of the household appliance.

12. A system (1) according to any one of claims 10 or 11, wherein the visual interface (5) comprises a screen (5) integrated in the household appliance configured to display a string (C) of text characters corresponding to the response provided by the second processing means (4),
and/or wherein the second processing means (4) are further configured to generate a response audio stream signal (SAR) corresponding to the determined response, and to transmit said response audio stream signal (SAR) to the first processing means (2);
wherein the system (1) further comprises voice output generation means (7) integrated in the household appliance (100) and configured to reproduce the response audio stream signal (SAR) to generate a voice response output.

13. A system according to any one of claims 10 to 12, wherein:
- the voice receiving means (2) comprise one or more microphones;
- the first processing means (3) comprise one or more electronic processing circuits and/or one or more electronic processors;
and wherein the system (1) further comprises transmission means (8) configured to transmit said query or request electric signal (SR),
and/or wherein said voice receiving means (2), said first processing means (3) and said transmission means (8) are integrated in a voice recognition module (30) incorporated in the household appliance (100).

14. A system (1) according to any one of claims 11 to 13, wherein the second processing means (4) comprise one or more electronic processing circuits and/or one or more electronic processors, arranged remotely with respect to the household appliance (100),
and wherein the system (1) further comprises telecommunication means (9) configured to connect the transmission means (8) of the household appliance to the second processing means (4),
and wherein the second processing means (4) are implemented in a cloud infrastructure (20) and the telecommunication means (9) comprise wireless communication means, a router and an infrastructure for telecommunicating to the cloud infrastructure (20).

15. A household appliance (100) comprising a first portion (10) of a system (1) according to any one of claims 10 to 14, comprising at least said voice receiving means (2), first processing means (3) and visual interface (5),
said household appliance (100) being operatively connected to a second portion (20) of a system (1) according to any one of claims 10 to 14, comprising at least said second processing means (4).

## Patentansprüche

1. Verfahren zum Steuern eines und/oder Kommunizieren mit einem Haushaltsgerät (100) mittels Sprachbefehlen und mit einer Verifizierung des Ermöglichens einer Fernsteuerung, umfassend die folgenden Schritte:
- Empfangen eines akustischen Sprachsignals (SV) entsprechend einem durch einen Benutzer ausgesprochenen Sprach-Anfrage- und/oder Aufforderungsausdruck und Erzeugen eines entsprechenden ersten elektrischen Signals (SE), welches für das akustische Sprachsignal (SV) repräsentativ ist, durch in dem Haushaltsgerät (100) integrierte Sprachempfangsmittel (2);
- Erzeugen eines elektrischen Anfrage- und/oder Aufforderungssignals (SR) auf Grundlage des empfangenen ersten elektrischen Signals (SE), welches für das akustische Sprachsignal (SV) repräsentativ ist, durch in dem Haushaltsgerät (100) integrierte erste Verarbeitungsmittel (3), welche betriebsmäßig mit den Sprachempfangsmitteln (2) verbunden sind;
- Übertragen des elektrischen Anfrage- und/oder Aufforderungssignals (SR) an zweite Verarbeitungsmittel (4);
- Verarbeiten des elektrischen Anfrage- und/oder Aufforderungssignals (SR) durch die zweiten Verarbeitungsmittel (4), um eine Benutzeranfrage und/oder - aufforderung zu identifizieren;
- Erkennen, durch die zweiten Verarbeitungsmittel (4), ob die Benutzeranfrage und/oder -aufforderung ein Befehl und/oder eine Steueraktion ist, welcher/welche eine Fernsteuerungsermöglichung erfordert;
- wenn die Benutzeranfrage und/oder -aufforderung als ein Befehl und/oder eine Steueraktion erkannt worden ist, welcher/welche eine Fernsteuerungsermöglichung nicht erfordert, direkt Fortfahren mit den folgenden Schritten:
- Bestimmen einer dem Benutzer bereitzustellenden Antwort auf der Grundlage der identifizierten Benutzeranfrage und/oder -aufforderung durch die zweiten Verarbeitungsmittel (4);
- Erzeugen eines elektrischen Antwortsignals (C) entsprechend der bestimmten Antwort durch die zweiten Verarbeitungsmittel (4);
- Übertragen des elektrischen Antwortsignals (C) an die ersten Verarbeitungsmittel (3) des Haushaltsgeräts;
- Bereitstellen dem Benutzer einer visuellen Antwort und/oder einer schriftlichen Antwort und/oder einer Sprachantwort durch visuelle Anzeigemittel (5) oder Tonwiedergabemittel (7), welche in dem Haushaltsgerät (100) umfasst sind, auf Grundlage des elektrischen Antwortsignals (C);
- wenn die Benutzeranfrage und/oder -aufforderung als ein Befehl und/oder eine Steueraktion erkannt worden ist, welcher/welche eine Fernsteuerungsermöglichung erfordert, Durchführen einer Fernsteuerungs-Verifizierungs- und/oder Ermöglichungsprozedur und dann Durchführen der Schritte des Bestimmens und des Bereitstellens einer Antwort dem Benutzer;
wobei die Fernsteuerungs-Verifizierungs- und/oder Ermöglichungsprozedur umfasst:
- Verifizieren, ob ein Fernsteuerungsermöglichungszustand in dem Haushaltsgerät (100) aktiviert ist;
- wenn verifiziert worden ist, dass ein Fernsteuerungsermöglichungszustand in dem Haushaltsgerät (100) aktiviert ist, Bestimmen der Ausführung des Befehls und/oder der Steueraktion in dem Haushaltsgerät (100);
- wenn verifiziert worden ist, dass ein Fernsteuerungsermöglichungszustand in dem Haushaltsgerät (100) nicht aktiviert ist, Einstellen eines Bereitschaftszustands und Fragen den Benutzer nach einer Ermöglichungsaktion vor dem Ausführen des Befehls und/oder der Steueraktion.

2. Verfahren nach Anspruch 1, wobei der Schritt des Verifizierens, ob ein Fernsteuerungsermöglichungszustand in dem Haushaltsgerät (100) aktiviert ist, durch die ersten Verarbeitungsmittel (3) mittels einer lokalen Verarbeitung durch eine Verbindung mit einer lokalen Steuereinheit (40) des Haushaltsgeräts (100) durchgeführt wird oder durch die zweiten Verarbeitungsmittel (4) mittels einer Verbindung mit Speichermitteln (6) durchgeführt wird, welche in Fernkommunikation mit der Steuereinheit (40) des Haushaltsgeräts (100) sind und den Zustand (S) davon periodisch empfangen und speichern.

3. Verfahren nach einem der vorhergehenden Ansprüche, wobei, wenn die Benutzeranfrage und/oder -aufforderung als ein Befehl und/oder eine Steueraktion interpretiert worden ist, welcher/welche eine Fernsteuerungsermöglichung erfordert, und verifiziert worden ist, dass ein Fernsteuerungsermöglichungszustand in dem Haushaltsgerät (100) nicht aktiviert ist, das Verfahren ferner den folgenden Schritt umfasst:
- wenn der Benutzer die Ermöglichungsaktion mittels eines Sprachaktivierungsworts oder durch einen manuellen Befehl durchführt, Aktivieren des Fernsteuerungsermöglichungszustands und entweder Bestimmen oder Starten der Ausführung des Befehls und/oder der Steueraktion in dem Haushaltsgerät durch die ersten Verarbeitungsmittel (3) des Haushaltsgeräts.

4. Verfahren nach einem der vorhergehenden Ansprüche, umfassend, vor dem Schritt des Empfangens eines akustischen Sprachsignals (SV), die folgenden Schritte:
- Empfangen eines durch den Benutzer ausgesprochenen Aktivierungsworts (PA) und Erzeugen eines jeweiligen elektrischen Aktivierungswortsignals (SA) durch die in dem Haushaltsgerät integrierten Sprachempfangsmittel (2);
- Ausführen einer Erkennung des Aktivierungsworts (PA) durch die ersten Verarbeitungsmittel (3);
- in dem Fall, in welchem die Erkennung des Aktivierungsworts erfolgreich ist, Fortfahren, den Schritt des Empfangens eines akustischen Sprachsignals (SV) entsprechend einem Sprach-Anfrage- und/oder Aufforderungsausspruch und die wie in Anspruch 1 definierten nachfolgenden Schritte auszuführen.

5. Verfahren nach Anspruch 3 oder Anspruch 4, wobei der Schritt des Erzeugens eines elektrischen Anfrage- und/oder Aufforderungssignals (SR) ein Erzeugen eines jeweiligen Audiostream-Anfrage- und/oder Aufforderungssignals (SR) umfasst, welches für das akustische Sprachsignal (SV) repräsentativ ist,
und/oder wobei der Schritt des Erkennens des Aktivierungsworts durch die ersten Verarbeitungsmittel (3) und der Schritt des Verarbeitens des elektrischen Anfrage- und/oder Aufforderungssignals (SR) durch die zweiten Verarbeitungsmittel (4) ein Ausführen wenigstens einer Spracherkennungsalgorithmus und/oder einer Spracherkennungsprozedur umfassen.

6. Verfahren nach einem der vorhergehenden Ansprüche, wobei der Schritt des Verarbeitens des elektrischen Anfrage- und/oder Aufforderungssignals (SR) ein Erkennen umfasst, ob die Anfrage und/oder Aufforderung offen oder geschlossen ist,
wobei eine Anfrage und/oder Aufforderung als geschlossen erkannt wird, wenn sie einer spezifischen Anfrage und/oder Aufforderung entspricht, so dass die zweiten Verarbeitungsmittel (4) dazu in der Lage sind, auf Grundlage von Informationen und/oder Zuständen des Haushaltsgeräts, auf welche die zweiten Verarbeitungsmittel (4) zugreifen können, eine vorbestimmte eindeutige Antwort in Bezug auf die Anfrage und/oder Aufforderung bereitzustellen,
und wobei eine Anfrage und/oder Aufforderung in allen Fällen als offen erkannt wird, in welchem die Anfrage und/oder Aufforderung nicht als geschlossen erkannt worden ist.

7. Verfahren nach Anspruch 6, wobei:
wenn die Anfrage und/oder Aufforderung geschlossen ist:
- der Schritt des Identifizierens der Benutzeranfrage und/oder -aufforderung ein Identifizieren der erkannten geschlossenen Anfrage und/oder Aufforderung als eine Benutzeranfrage und/oder -aufforderung umfasst;
- der Schritt des Bestimmens einer dem Benutzer bereitzustellenden Antwort ein Bestimmen, als eine Antwort, der vorbestimmten eindeutigen Antwort in Bezug auf die geschlossene Anfrage und/oder Aufforderung umfasst;
wenn die Anfrage und/oder Aufforderung offen ist:
- der Schritt des Identifizierens der Benutzeranfrage und/oder -aufforderung ein Interpretieren der offenen Anfrage und/oder Aufforderung als eine Teilanfrage und/oder -aufforderung umfasst;
und das Verfahren die folgenden weiteren Schritte umfasst:
- Bestimmen und Senden einer einstweiligen Antwort an den Benutzer, welche eine Aufforderung für weitere Klarstellungen umfasst;
- Einstellen eines Bereitschaftszustands, welcher bereit ist, um einen weiteren Abschlusssprachausspruch zu empfangen, um die Anfrage und/oder Aufforderung durch den Benutzer abzuschließen.

8. Verfahren nach Anspruch 6 oder 7, wobei der Schritt des Erkennens, ob die Benutzeranfrage und/oder -aufforderung ein Befehl und/oder eine Steueraktion ist, welcher/welche eine Fernsteuerungsermöglichung erfordert, umfasst:
- Verifizieren, ob die Benutzeranfrage und/oder -aufforderung geschlossen ist;
- wenn die Benutzeranfrage und/oder -aufforderung geschlossen ist, Überprüfen, auf der Grundlage von Informationen, welche in den Speichermitteln (6) gespeichert sind oder auf welche die zweiten Verarbeitungsmittel (4) auf andere Weise zugreifen können, ob die Benutzeranfrage und/oder -aufforderung einem Befehl und/oder einer Steueraktion entspricht, welcher/welche eine Fernsteuerungsermöglichung erfordert.

9. Verfahren nach einem der vorhergehenden Ansprüche, wobei der Schritt des Verarbeitens des elektrischen Anfrage- und/oder Aufforderungssignals (SR), um eine Benutzeranfrage und/oder -aufforderung zu identifizieren, umfasst:
- Interpretieren der Benutzeranfrage und/oder -aufforderung als einen Befehl und/oder eine Steueraktion und/oder eine Frage;
und wobei das Verfahren ferner die folgenden Schritte umfasst:
wenn die Benutzeranfrage und/oder -aufforderung als ein Befehl interpretiert worden ist, Übertragen eines Befehlssignals entsprechend dem Befehl an die ersten Verarbeitungsmittel (3) des Haushaltsgeräts durch die zweiten Verarbeitungsmittel (4);
wenn die Benutzeranfrage und/oder -aufforderung als eine Steueraktion interpretiert worden ist, Konsultieren, durch die zweiten Verarbeitungsmittel (4), von Speichermitteln (6), in welchen der Zustand des Haushaltsgeräts (100) periodisch gespeichert wird, um die zu implementierende Aktion und den Ausführungsmodus zu definieren;
wenn die Benutzeranfrage und/oder -aufforderung als eine relevante Frage interpretiert worden ist, so dass die zweiten Verarbeitungsmittel (4) dazu in der Lage sind, eine eindeutige Antwort bereitzustellen, Erzeugen der eindeutigen Antwort auf die Frage durch die zweiten Verarbeitungsmittel (4);
wenn die Benutzeranfrage und/oder -aufforderung als eine nicht relevante Frage interpretiert worden ist, so dass die zweiten Verarbeitungsmittel (4) nicht dazu in der Lage sind, eine eindeutige Antwort bereitzustellen, Erzeugen einer einstweiligen Antwort für eine Aufforderung für weitere Informationen durch die zweiten Verarbeitungsmittel (4).

10. System (1) zum Steuern eines und/oder Interagieren mit einem Haushaltsgerät (100) mittels Sprachbefehlen und mit einer Verifizierung des Ermöglichens einer Fernsteuerung, umfassend:
- in dem Haushaltsgerät (100) integrierte Sprachempfangsmittel (2), welche dazu eingerichtet sind, ein akustisches Sprachsignal (SV) entsprechend einem durch den Benutzer ausgesprochenen Anfrage- und/oder Aufforderungssprachausdruck zu empfangen und es in ein entsprechendes erstes elektrisches Signal (SE) zu transformieren, welches für das akustische Sprachsignal (SV) repräsentativ ist;
- in dem Haushaltsgerät (100) integrierte erste Verarbeitungsmittel (3), welche betriebsmäßig mit den Sprachempfangsmitteln (2) verbunden sind, um das erste elektrische Signal (SE) zu empfangen, wobei die ersten Verarbeitungsmittel (3) dazu eingerichtet sind, auf Grundlage des ersten elektrischen Signals (SE), welches für das akustische Sprachsignal (SV) repräsentativ ist, ein elektrisches Anfrage- und/oder Aufforderungssignal (SR) zu erzeugen;
- zweite Verarbeitungsmittel (4), welche betriebsmäßig mit den ersten Verarbeitungsmitteln (3) verbunden sind, wobei die zweiten Verarbeitungsmittel (4) eingerichtet sind zum:
Empfangen des elektrischen Anfrage- und/oder Aufforderungssignals (SR) von den ersten Verarbeitungsmitteln (3);
Verarbeiten des elektrischen Anfrage- und/oder Aufforderungssignals (SR), um eine Benutzeranfrage und/oder -aufforderung zu identifizieren;
Erkennen, ob die Benutzeranfrage und/oder -aufforderung ein Befehl und/oder eine Steueraktion ist, welcher/welche eine Fernsteuerungsermöglichung erfordert;
- wenn die Benutzeranfrage und/oder -aufforderung als ein Befehl und/oder eine Steueraktion erkannt worden ist, welcher/welche eine Fernsteuerungsermöglichung nicht erfordert, direkt Fortfahren mit den folgenden Schritten:
Bestimmen einer dem Benutzer bereitzustellenden Antwort auf Grundlage der identifizierten Benutzeranfrage und/oder -aufforderung,
Erzeugen eines elektrischen Antwortsignals (C) entsprechend der bestimmten Antwort und Übertragen des elektrischen Antwortsignals (C) an die ersten Verarbeitungsmittel (3) des Haushaltsgeräts;
- wenn die Benutzeranfrage und/oder -aufforderung als ein Befehl und/oder eine Steueraktion erkannt worden ist, welcher/welche eine Fernsteuerungsermöglichung erfordert, Durchführen einer Fernsteuerungs-Verifizierungs- und/oder Ermöglichungsprozedur und dann Durchführen der Schritte des Bestimmens und des Bereitstellens einer Antwort dem Benutzer; wobei die Fernsteuerungs-Verifizierungs- und/oder Ermöglichungsprozedur umfasst:
- Verifizieren, ob ein Fernsteuerungsermöglichungszustand in dem Haushaltsgerät (100) aktiviert ist;
- wenn verifiziert worden ist, dass ein Fernsteuerungsermöglichungszustand in dem Haushaltsgerät (100) aktiviert ist, Bestimmen der Ausführung und/oder des Startens des Befehls und/oder der Steueraktion in dem Haushaltsgerät (100);
- wenn verifiziert worden ist, dass ein Fernsteuerungsermöglichungszustand in dem Haushaltsgerät (100) nicht aktiviert ist, Einstellen eines Bereitschaftszustands und Fragen den Benutzer nach einer Ermöglichungsaktion vor dem Ausführen des Befehls und/oder der Steueraktion;
- eine in dem Haushaltsgerät (100) umfasste Benutzerschnittstelle (5), welche betriebsmäßig mit den ersten Verarbeitungsmitteln (3) verbunden ist, wobei die Benutzerschnittstelle (5) dazu eingerichtet ist, dem Benutzer auf Grundlage des elektrischen Antwortsignals (C) eine visuelle Antwort und/oder eine schriftliche Antwort und/oder eine Sprachantwort bereitzustellen.

11. System (1) nach Anspruch 10, ferner umfassend:
- eine Steuereinheit (40) des Haushaltsgeräts, welche betriebsmäßig mit den ersten Verarbeitungsmitteln (3) verbunden ist und dazu eingerichtet ist, mit den ersten Verarbeitungsmitteln (3) zusammenzuarbeiten, um Befehle und/oder Steueraktionen des Haushaltsgeräts (100) auszuführen, und ferner dazu eingerichtet ist, Informationen in Bezug auf den Zustand (S) des Haushaltsgeräts zu steuern und/oder zu überwachen, welche Informationen über das Ermöglichen oder das Deaktivieren des Fernsteuerungszustands des Haushaltsgeräts umfassen;
- Speichermittel (6), welche betriebsmäßig mit den zweiten Verarbeitungsmitteln (4) und mit der Steuereinheit (40) des Haushaltsgeräts verbunden sind, wobei die Speichermittel (6) eingerichtet sind zum:
- Empfangen, von der Steuereinheit (40), und Speichern der Informationen in Bezug auf den Zustand (S) des Haushaltsgeräts;
- Bereitstellen den zweiten Verarbeitungsmitteln (4) der aktualisierten Informationen über das Ermöglichen oder das Deaktivieren des Fernsteuerungszustands des Haushaltsgeräts.

12. System (1) nach einem der Ansprüche 10 oder 11, wobei die visuelle Schnittstelle (5) einen in dem Haushaltsgerät integrierten Bildschirm (5) umfasst, welcher dazu eingerichtet ist, eine Zeichenfolge (C) von Textzeichen entsprechend der durch die zweiten Verarbeitungsmittel (4) bereitgestellten Antwort anzuzeigen,
und/oder wobei die zweiten Verarbeitungsmittel (4) ferner dazu eingerichtet sind, ein Antwort-Audiostream-Signal (SAR) entsprechend der bestimmten Antwort zu erzeugen und das Antwort-Audiostream-Signal (SAR) an die ersten Verarbeitungsmittel (2) zu übertragen;
wobei das System (1) ferner Sprachausgabeerzeugungsmittel (7) umfasst, welche in dem Haushaltsgerät (100) integriert sind und dazu eingerichtet sind, das Antwort-Audiostream-Signal (SAR) wiederzugeben, um eine Sprachantwortausgabe zu erzeugen.

13. System (1) nach einem der Ansprüche 10 bis 12, wobei:
- die Sprachempfangsmittel (2) ein oder mehrere Mikrophone umfassen;
- die ersten Verarbeitungsmittel (3) eine oder mehrere elektronische Verarbeitungsschaltungen und/oder einen oder mehrere elektronische Prozessoren umfassen;
und wobei das System (1) ferner Übertragungsmittel (8) umfasst, welche dazu eingerichtet sind, das elektrische Anfrage- und/oder Aufforderungssignal (SR) zu übertragen,
und/oder wobei die Sprachempfangsmittel (2), die ersten Verarbeitungsmittel (3) und die Übertragungsmittel (8) in einem Spracherkennungsmodul (30) integriert sind, welches in dem Haushaltsgerät (100) aufgenommen ist.

14. System (1) nach einem der Ansprüche 11 bis 13, wobei die zweiten Verarbeitungsmittel (4) eine oder mehrere elektronische Verarbeitungsschaltungen und/oder einen oder mehrere elektronische Prozessoren umfassen, welche entfernt in Bezug auf das Haushaltsgerät (100) angeordnet sind,
und wobei das System (1) ferner Telekommunikationsmittel (9) umfasst, welche dazu eingerichtet sind, die Übertragungsmittel (8) des Haushaltsgeräts mit den zweiten Verarbeitungsmitteln (4) zu verbinden,
und wobei die zweiten Verarbeitungsmittel (4) in einer Cloud-Infrastruktur (20) implementiert sind und die Telekommunikationsmittel (9) drahtlose Kommunikationsmittel, einen Router und eine Infrastruktur zum Telekommunizieren mit der Cloud-Infrastruktur (20) umfassen.

15. Haushaltsgerät (100), umfassend einen ersten Teil (10) eines Systems (1) nach einem der Ansprüche 10 bis 14, welcher wenigstens die Sprachempfangsmittel (2), die ersten Verarbeitungsmittel (3) und eine visuelle Schnittstelle (5) umfasst,
wobei das Haushaltsgerät (100) betriebsmäßig mit einem zweiten Teil (20) eines Systems (1) nach einem der Ansprüche 10 bis 14 verbunden ist, welcher wenigstens die zweiten Verarbeitungsmittel (4) umfasst.

## Revendications

1. Procédé de commande et/ou de communication avec un appareil électroménager (100) au moyen d'instructions vocales et avec vérification de l'activation d'une commande à distance, comprenant les étapes consistant à :
- recevoir un signal vocal acoustique (SV), correspondant à une expression de demande et/ou requête vocale énoncée par un utilisateur, et générer un premier signal électrique correspondant (SE) représentatif du signal vocal acoustique (SV), par des moyens de réception vocale (2) intégrés dans l'appareil électroménager (100) ;
- générer un signal électrique de demande et/ou de requête (SR), sur la base dudit premier signal électrique reçu (SE), représentatif du signal vocal acoustique (SV), par des premiers moyens de traitement (3) intégrés dans l'appareil électroménager (100) connectés de manière fonctionnelle auxdits moyens de réception vocale (2) ;
- transmettre ledit signal électrique de demande et/ou de requête (SR) à des deuxièmes moyens de traitement (4) ;
- traiter ledit signal électrique de demande et/ou requête (SR), par les deuxièmes moyens de traitement (4), pour identifier une demande et/ou requête d'utilisateur ;
- reconnaître, par les deuxièmes moyens de traitement (4), si la demande et/ou requête d'utilisateur est une action de commande et/ou une instruction qui nécessite une activation de commande à distance ;
- si la demande et/ou requête d'utilisateur est reconnue comme étant une action de commande et/ou une instruction qui ne nécessite pas l'activation de la commande à distance, procéder directement aux étapes suivantes consistant à :
-- déterminer une réponse à fournir à l'utilisateur sur la base de la demande et/ou requête d'utilisateur identifiée, par les deuxièmes moyens de traitement (4) ;
-- générer un signal électrique de réponse (C) correspondant à la réponse déterminée, par les deuxièmes moyens de traitement (4) ;
-- transmettre ledit signal électrique de réponse (C) aux premiers moyens de traitement (3) de l'appareil électroménager ;
-- fournir à l'utilisateur une réponse visuelle et/ou écrite et/ou vocale, par un moyen d'affichage visuel (5) ou un moyen de reproduction de son (7) compris dans l'appareil électroménager (100), sur la base dudit signal électrique de réponse (C) ;
- si la demande et/ou requête d'utilisateur est reconnue comme étant une action de commande et/ou une instruction qui nécessite l'activation d'une commande à distance, effectuer une procédure d'activation et/ou de vérification de commande à distance puis effectuer lesdites étapes de détermination et de fourniture d'une réponse à l'utilisateur ;
dans lequel ladite procédure d'activation et/ou de vérification de commande à distance comprend :
-- la vérification si un état d'activation de commande à distance est actionné dans l'appareil électroménager (100),
-- s'il est vérifié qu'un état d'activation de commande à distance est actionné dans l'appareil électroménager (100), la détermination de l'exécution de l'action de commande et/ou de l'instruction dans l'appareil électroménager (100) ;
-- s'il est vérifié qu'un état d'activation de commande à distance n'est pas actionné dans l'appareil électroménager (100), l'établissement d'un état de veille et la demande à l'utilisateur d'une action d'activation avant d'exécuter l'action de commande et/ou l'instruction.

2. Procédé selon la revendication 1, dans lequel l'étape de vérification de l'actionnement d'un état d'activation de commande à distance dans l'appareil électroménager (100) est réalisée par les premiers moyens de traitement (3) au moyen d'un traitement local, par l'intermédiaire d'une connexion à une unité de commande locale (40) de l'appareil électroménager (100), ou est réalisée par les deuxièmes moyens de traitement (4) au moyen d'une connexion à des moyens de stockage (6) qui sont en communication distante avec l'unité de commande (40) de l'appareil électroménager (100) et reçoivent et stockent périodiquement l'état (S) de celui-ci.

3. Procédé selon l'une quelconque des revendications précédentes, dans lequel si la demande et/ou requête d'utilisateur est interprétée comme étant une action de commande et/ou une instruction qui nécessite une activation de commande à distance, et s'il est vérifié qu'un état d'activation de commande à distance n'est pas actionné dans l'appareil électroménager (100), le procédé comprend en outre l'étape consistant à :
- si l'utilisateur réalise l'action d'activation au moyen d'un mot d'activation vocale ou par une instruction manuelle, actionner l'état d'activation de commande à distance et déterminer ou lancer l'exécution de l'action de commande et/ou de l'instruction dans l'appareil électroménager, par les premiers moyens de traitement (3) de l'appareil électroménager.

4. Procédé selon l'une quelconque des revendications précédentes, comprenant, avant ladite étape de réception d'un signal vocal acoustique (SV), les étapes consistant à :
- recevoir un mot d'actionnement (PA) prononcé par l'utilisateur et générer un signal électrique de mot d'actionnement respectif (SA), par lesdits moyens de réception vocale (2) intégrés dans l'appareil électroménager ;
- effectuer une reconnaissance du mot d'actionnement (PA), par lesdits premiers moyens de traitement (3) ;
- dans le cas où la reconnaissance du mot d'actionnement est réussie, procéder à la réalisation de ladite étape de réception d'un signal vocal acoustique (SV) correspondant à un énoncé de demande et/ou requête vocale et aux étapes suivantes telles que définies dans la revendication 1.

5. Procédé selon la revendication 3 ou 4, dans lequel l'étape de génération d'un signal électrique de demande et/ou de requête (SR) comprend la génération d'un signal de demande et/ou de requête de flux audio (SR) respectif représentatif du signal vocal acoustique (SV),
et/ou dans lequel l'étape de reconnaissance du mot d'actionnement par les premiers moyens de traitement (3) et l'étape de traitement du signal électrique de demande et/ou de requête (SR), par les deuxièmes moyens de traitement (4), comprennent l'exécution d'au moins une procédure et/ou un algorithme de reconnaissance vocale.

6. Procédé selon l'une quelconque des revendications précédentes, dans lequel ladite étape de traitement du signal électrique de demande et/ou de requête (SR) comprend la reconnaissance si la demande et/ou requête est ouverte ou fermée,
dans lequel une demande et/ou requête est reconnue comme étant fermée si elle correspond à une demande et/ou requête spécifique, de sorte que les deuxièmes moyens de traitement (4) soient aptes à fournir une réponse univoque prédéterminée relative à la demande et/ou requête, sur la base d'informations et/ou d'états de l'appareil électroménager qui sont accessibles aux deuxièmes moyens de traitement (4),
et dans lequel une demande et/ou requête est reconnue comme étant ouverte dans tous les cas où ladite demande et/ou requête n'est pas reconnue comme étant fermée.

7. Procédé selon la revendication 6, dans lequel :
si la demande et/ou requête est fermée :
- l'étape d'identification de la demande et/ou requête d'utilisateur comprend l'identification de la demande et/ou requête fermée reconnue en tant demande et/ou requête d'utilisateur ;
- l'étape de détermination d'une réponse à fournir à l'utilisateur comprend la détermination, comme une réponse, de ladite réponse univoque prédéterminée relative à la demande et/ou requête fermée ;
si la demande et/ou requête est ouverte :
- l'étape d'identification de la demande et/ou requête d'utilisateur comprend l'interprétation de la demande et/ou requête ouverte comme étant une demande et/ou requête partielle,
et le procédé comprend les étapes supplémentaires consistant à :
- déterminer et envoyer une réponse interlocutoire à l'utilisateur, comprenant une demande d'éclaircissements supplémentaires ;
- établir un état de veille prêt à recevoir un autre énoncé vocal d'achèvement pour achever la demande et/ou requête par l'utilisateur.

8. Procédé selon l'une quelconque des revendications 6 ou 7, dans lequel l'étape consistant à reconnaître si la demande et/ou requête d'utilisateur est une action de commande et/ou une instruction qui nécessite une activation de commande à distance, comprend :
- la vérification si la demande et/ou requête d'utilisateur est fermée ;
- si la demande et/ou requête d'utilisateur est fermée, la vérification, sur la base d'informations stockées dans les moyens de stockage (6) ou autrement accessibles par les deuxièmes moyens de traitement (4), si la demande et/ou requête d'utilisateur correspond à une action de commande et/ou une instruction nécessitant l'activation de commande à distance.

9. Procédé selon l'une quelconque des revendications précédentes, dans lequel l'étape de traitement du signal électrique de demande et/ou requête (SR) pour identifier une demande et/ou requête d'utilisateur, comprend :
- l'interprétation de la demande et/ou requête d'utilisateur comme étant une instruction et/ou une action de commande et/ou une question ;
et dans lequel le procédé comprend en outre les étapes consistant à :
si la demande et/ou requête d'utilisateur est interprétée comme étant une instruction, transmettre un signal d'instruction correspondant à l'instruction aux premiers moyens de traitement (3) de l'appareil électroménager, par les deuxièmes moyens de traitement (4) ;
si la demande et/ou requête d'utilisateur est interprétée comme étant une action de commande, consulter, par les deuxièmes moyens de traitement (4), des moyens de stockage (6) dans lesquels l'état de l'appareil électroménager (100) est stocké périodiquement, pour définir l'action à mettre en oeuvre et le mode d'exécution ;
si la demande et/ou requête d'utilisateur est interprétée comme étant une question pertinente, de sorte que les deuxièmes moyens de traitement (4) soient capables à fournir une réponse univoque, générer ladite réponse univoque à la question, par les deuxièmes moyens de traitement (4) ;
si la demande et/ou requête d'utilisateur est interprétée comme étant une question non pertinente, de sorte que les deuxièmes moyens de traitement (4) ne soient pas capables de fournir une réponse univoque, générer une réponse interlocutoire à une demande d'informations complémentaires, par les deuxièmes moyens de traitement (4).

10. Système (1) de commande et/ou d'interaction avec un appareil électroménager (100) au moyen d'instructions vocales et avec vérification de l'activation d'une commande à distance, comprenant :
- des moyens de réception vocale (2) intégrés à l'appareil électroménager (100), configurés pour recevoir un signal vocal acoustique (SV), correspondant à une expression vocale de demande et/ou de requête énoncée par l'utilisateur, et pour le transformer en un premier signal électrique (SE) correspondant représentatif du signal vocal acoustique (SV) ;
- des premiers moyens de traitement (3) intégrés dans l'appareil électroménager (100) connectés de manière fonctionnelle auxdits moyens de réception vocale (2) pour recevoir ledit premier signal électrique (SE), lesdits premiers moyens de traitement (3) étant configurés pour générer un signal électrique de demande et/ou requête (SR) sur la base dudit premier signal électrique (SE), représentatif du signal vocal acoustique (SV) ;
- des deuxièmes moyens de traitement (4) connectés de manière fonctionnelle auxdits premiers moyens de traitement (3), lesdits deuxièmes moyens de traitement (4) étant configurés pour :
recevoir ledit signal électrique de demande et/ou de requête (SR) à partir des premiers moyens de traitement (3) ;
traiter ledit signal de demande et/ou de requête électrique (SR) pour identifier une demande et/ou une requête d'utilisateur ;
reconnaître si la demande et/ou requête d'utilisateur est une action de commande et/ou une instruction qui nécessite une activation de commande à distance ;
- si la demande et/ou requête d'utilisateur est reconnue comme étant une action de commande et/ou une instruction qui ne nécessite pas d'activation de commande à distance, procéder directement aux étapes consistant à :
déterminer une réponse à fournir à l'utilisateur, sur la base de la demande et/ou requête d'utilisateur identifiée, générer un signal électrique de réponse (C) correspondant à la réponse déterminée, et transmettre ledit signal électrique de réponse (C) aux premiers moyens de traitement (3) de l'appareil électroménager ;
- si la demande et/ou requête d'utilisateur est reconnue comme étant une action de commande et/ou une instruction qui nécessite l'activation de commande à distance, effectuer une procédure d'activation et/ou de vérification de commande à distance, puis effectuer lesdites étapes de détermination et de fourniture d'une réponse à l'utilisateur ;
dans lequel ladite procédure d'activation et/ou de vérification de commande à distance comprend :
- la vérification si un état d'activation de commande à distance est actionné dans l'appareil électroménager (100) ;
- s'il est vérifié qu'un état d'activation de commande à distance est actionné dans l'appareil électroménager (100), la détermination de l'exécution et/ou le lancement de l'action de commande et/ou de l'instruction dans l'appareil électroménager (100) ;
- s'il est vérifié qu'un état d'activation de commande à distance n'est pas activé dans l'appareil électroménager (100), l'établissement d'un état de veille et la demande à l'utilisateur d'une action de commande avant d'exécuter l'action de commande et/ou l'instruction ;
- une interface utilisateur (5) comprise dans l'appareil électroménager (100), connectée de manière fonctionnelle auxdits premiers moyens de traitement (3), ladite interface utilisateur (5) étant configurée pour fournir une réponse visuelle et/ou écrite et/ou vocale à l'utilisateur sur la base dudit signal électrique de réponse (C).

11. Système (1) selon la revendication 10, comprenant en outre :
- une unité de commande (40) de l'appareil électroménager connectée de manière fonctionnelle aux premiers moyens de traitement (3) et configurée pour coopérer avec lesdits premiers moyens de traitement (3) afin d'exécuter des actions de commande et/ou des instructions de l'appareil électroménager (100), et configurée en outre pour commander et/ou surveiller des informations relatives à l'état (S) de l'appareil électroménager, comprenant des informations sur l'activation ou la désactivation de l'état de la commande à distance de l'appareil électroménager ;
- des moyens de stockage (6) connectés de manière fonctionnelle aux deuxièmes moyens de traitement (4) et à ladite unité de commande (40) de l'appareil électroménager, lesdits moyens de stockage (6) étant configurés pour :
-- recevoir, à partir de ladite unité de commande (40), et stocker lesdites informations relatives à l'état (S) de l'appareil électroménager :
-- fournir aux deuxièmes moyens de traitement (4) lesdites informations mises à jour sur l'activation ou la désactivation de l'état de commande à distance de l'appareil électroménager.

12. Système (1) selon l'une quelconque des revendications 10 ou 11, dans lequel l'interface visuelle (5) comprend un écran (5) intégré à l'appareil électroménager configuré pour afficher une chaîne (C) de caractères textuels correspondant à la réponse fournie par les deuxièmes moyens de traitement (4),
et/ou dans lequel les deuxièmes moyens de traitement (4) sont en outre configurés pour générer un signal de flux audio de réponse (SAR) correspondant à la réponse déterminée, et pour transmettre ledit signal de flux audio de réponse (SAR) aux premiers moyens de traitement (2) ;
dans lequel le système (1) comprend en outre des moyens de génération de sortie vocale (7) intégrés dans l'appareil électroménager (100) et configurés pour reproduire le signal de flux audio de réponse (SAR) pour générer une sortie de réponse vocale.

13. Système selon l'une quelconque des revendications 10 à 12, dans lequel :
- les moyens de réception vocale (2) comprennent un ou plusieurs microphones ;
- les premiers moyens de traitement (3) comprennent un ou plusieurs circuits de traitement électroniques et/ou un ou plusieurs processeurs électroniques ;
et dans lequel le système (1) comprend en outre des moyens de transmission (8) configurés pour transmettre ledit signal électrique de demande ou de requête (SR),
et/ou dans lequel lesdits moyens de réception vocale (2), lesdits premiers moyens de traitement (3) et lesdits moyens de transmission (8) sont intégrés dans un module de reconnaissance vocale (30) intégré dans l'appareil électroménager (100).

14. Système (1) selon l'une quelconque des revendications 11 à 13, dans lequel les deuxièmes moyens de traitement (4) comprennent un ou plusieurs circuits de traitement électroniques et/ou un ou plusieurs processeurs électroniques, disposés à distance par rapport à l'appareil électroménager (100),
et dans lequel le système (1) comprend en outre des moyens de télécommunication (9) configurés pour connecter les moyens de transmission (8) de l'appareil électroménager aux deuxièmes moyens de traitement (4),
et dans lequel les deuxièmes moyens de traitement (4) sont mis en oeuvre dans une infrastructure en nuage (20) et les moyens de télécommunication (9) comprennent un moyen de communication sans fil, un routeur et une infrastructure de télécommunication vers l'infrastructure en nuage (20).

15. Appareil électroménager (100) comprenant une première partie (10) d'un système (1) selon l'une quelconque des revendications 10 à 14, comprenant au moins lesdits moyens de réception vocale (2), lesdits premiers moyens de traitement (3) et ladite interface visuelle (5),
ledit appareil électroménager (100) étant connecté de manière fonctionnelle à une deuxième partie (20) d'un système (1) selon l'une quelconque des revendications 10 à 14, comprenant au moins lesdits deuxièmes moyens de traitement (4).
